# FASCICULE DE BREVET EUROPEEN

(11) **EP 4 413 238 B1**
(45) Date de publication et mention de la délivrance du brevet: **30.07.2025**
(21) Numéro de dépôt: 22789978.8
(22) Date de dépôt: 30.09.2022
(51) Int. Cl.: F01D 5/22, F01D 5/30

(54) **AUBE DE TURBINE DE TURBOMACHINE AVEC UN EFFORT DE CONTACT DE PRETORSION EN FONCTIONNEMENT AUTO-GÉNÉRÉ**
TURBINENSCHAUFEL EINES TURBINENMOTORS MIT IM BETRIEB SELBSTERZEUGTER VERRIEGELUNGSKONTAKTKRAFT
TURBINE BLADE OF A TURBINE ENGINE WITH SELF-GENERATED INTERLOCK CONTACT FORCE IN OPERATION

(30) Priorité: 07.10.2021 FR 2110651
(43) Date de publication de la demande: 14.08.2024
(73) Titulaire: SAFRAN AIRCRAFT ENGINES, 75015 Paris (FR); Safran Ceramics, 33185 Le Haillan (FR)
(72) Inventeur: GIRARD, Patrick, Joseph, Marie, 77550 MOISSY-CRAMAYEL (FR); ESCURE, Didier, René, André, 77550 MOISSY-CRAMAYEL (FR); GIMAT, Matthieu, Arnaud, 77550 MOISSY-CRAMAYEL (FR); CONGRATEL, Sébastien, Serge, Francis, 77550 MOISSY-CRAMAYEL (FR); DE CASTRO, Arthur, 77550 MOISSY-CRAMAYEL (FR)
(74) Mandataire: Cabinet Beau de Loménie
(86) Numéro de dépôt international: PCT/FR2022/051853
(87) Numéro de publication internationale: WO 2023/057707

(56) Documents cités:
- FR-A1- 2 970 999
- FR-A1- 3 081 915
- US-A1- 2020 408 099

## Description

### Domaine Technique

L'invention concerne les aubes mobiles d'une turbine de turbomachines, notamment des turbomoteurs aéronautiques ou des turbines industrielles, et plus particulièrement à des aubes mobiles à talon réalisées en matériau composite à matrice céramique, désigné ci-après par matériau CMC.

L'invention s'applique notamment pour des aubes mobiles de turbine basse pression d'une turbomachine d'un aéronef, mais peut également s'appliquer pour des aubes mobiles d'autre module, des aubages fixes, des pièces multi-pales, à condition d'intégrer un talon ou une plateforme. Par aubes mobiles, on entend des aubes d'une roue à aubes qui tourne autour d'un axe de rotation.

### Technique antérieure

Dans la présente demande, les termes « amont » et « aval » sont définis par rapport au sens d'écoulement normal du gaz (de l'amont vers l'aval) à travers une turbomachine. On appelle également « axe de la turbomachine » ou « axe moteur », l'axe de rotation du rotor de la turbomachine. La direction axiale correspond à la direction de l'axe de la turbomachine et une direction radiale est une direction perpendiculaire à l'axe de la turbomachine et coupant cet axe. De même, un plan axial est un plan contenant l'axe de la turbomachine, et un plan radial est un plan perpendiculaire à cet axe.

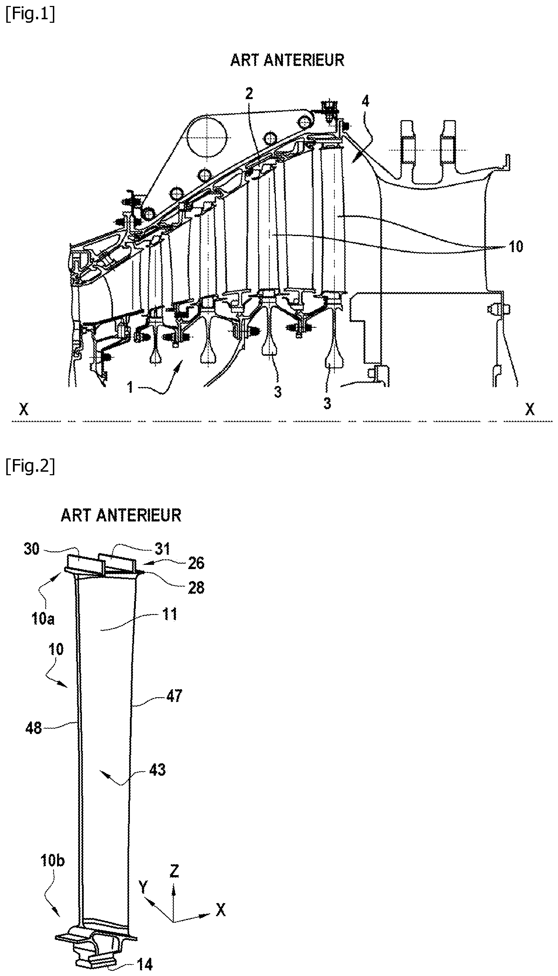

Dans une turbomachine telle que représentée sur la figure 1, une turbine basse pression 4 récupère une partie de l'énergie issue de la combustion des gaz pour le fonctionnement de la soufflante, du compresseur et des accessoires de la turbomachine. Un des éléments constitutifs de la turbine basse pression 4 est le rotor 1 qui est un assemblage de disques et d'aubes 10 sur un arbre. Le rotor 1 comporte une pluralité d'étages d'aubes mobiles 10, les aubes mobiles étant agencées radialement autour de l'axe XX de rotation du rotor 1.

Une aube mobile 10, telle que représentée sur la figure 2, comporte une pale 11 qui s'étend selon une direction radiale Z entre une extrémité proximale 10b (extrémité radialement interne) et une extrémité distale 10a (extrémité radialement externe) de l'aube 10. Autrement dit, la pale 11 s'étend selon une direction orthogonale à l'axe XX de rotation du rotor 1. La pale 11 comporte une face extrados (non visible sur la figure 2) et une face d'intrados 43 reliées en amont par un bord d'attaque 48 et en aval par un bord de fuite 47.

A l'extrémité proximale 10b de la pale 11, l'aube 10 comprend un pied 14 permettant de la fixer à un disque 3 du rotor 1, et plus particulièrement dans une alvéole complémentaire du disque 3. Le disque 3 comporte classiquement une pluralité d'alvéoles réparties radialement sur sa circonférence pour recevoir plusieurs pieds 14 d'aube 10. La pale 11 permet de récupérer les efforts des gaz traversant la turbomachine pour les transmettre au disque 3 du rotor 1.

A l'extrémité distale 10a de la pale 11, l'aube 10 comporte une plateforme transversale 26, appelée plus couramment talon.

FR2 970 999 A1 divulgue une aube de turbomachine selon la préambule de la revendication 1.

Les aubes 10 de turbines sont classiquement sujettes à des excitations vibratoires en fonctionnement moteur.

Une solution connue pour limiter les réponses et contraintes vibratoires est l'introduction d'une technologie de contact frottant entre les talons 26 des aubes 10 adjacentes, afin d'apporter de l'amortissement au système. Cette technologie est dite de pré-torsion ou « interlock » en anglais.

Cette technologie se caractérise par une découpe spécifique des faces latérales du talon, avec une excroissance coté extrados, et une empreinte complémentaire coté intrados. Lors du montage, une mise en contact est générée sur ces motifs par le biais d'une déformée angulaire de la pale (= la prétorsion).

Les vibrations de l'aube en fonctionnement induisent des glissements relatifs au niveau de cette zone de contact, qui, couplées aux pressions de contact, créent de l'amortissement par friction.

L'amortissement apporté par la technologie dite de pré-torsion est fortement lié à la valeur de l'effort de contact inter-aubes. Un effort est classiquement installé par conception dès le montage, cependant, les formes des aubes déformées en fonctionnement et les déplacements relatifs des talons adjacents peuvent faire varier cet effort, notamment à haut régime où les sollicitations vibratoires sont exacerbées.

Dans le cas d'une variation à la baisse, il est nécessaire d'amplifier l'effort au montage, ce qui se traduit par des sur-contraintes statiques induites. Ce cas de figure est particulièrement gênant pour des aubes en matériau CMC dont les admissibles mécaniques sont faibles, et peut même s'avérer bloquant.

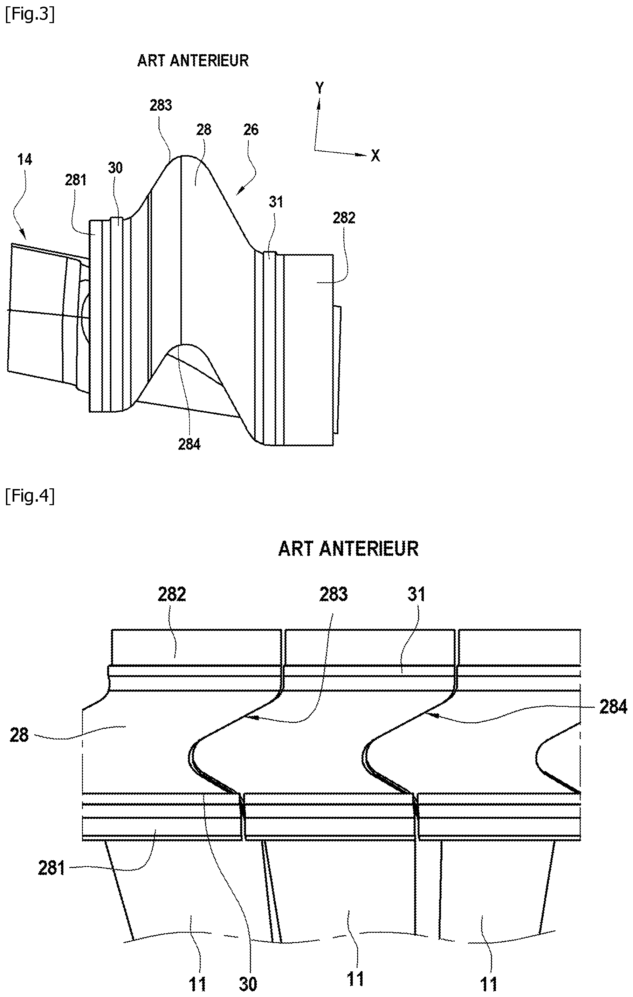

Pour illustrer cela, la figure 3 présente plus précisément la partie supérieure de l'aube 10 et plus précisément une vue de dessus du talon 26 de l'aube 10 représentée en figure 2. Le talon 26 comporte une plateforme 28 présentant un becquet amont 281 et un becquet aval 282 s'étendant transversalement par rapport au sens d'écoulement des gaz (selon l'axe X). Les deux becquets 281 et 282 sont reliés entre eux par deux bords latéraux 283 et 284 présentant un profil dit en V, ou encore Z. La plateforme 28 présente un premier bord latéral 283 positionné du coté extrados de la pale 11 et un deuxième bord latéral 284 positionné du coté intrados de la pale 11. Pour différencier ces deux bords latéraux, on nommera par la suite « bord latéral extrados 283 » le bord latéral de la plateforme 28 situé coté extrados de la pale 11, et « bord latéral intrados 284» le bord latéral de la plateforme 28 situé coté intrados de la pale 11.

Le talon 26 comporte en outre deux léchettes 30 et 31 faisant saillies par rapport à la plateforme 28 et s'étendant selon une direction transversale par rapport au sens d'écoulement des gaz (selon l'axe X). Les léchettes 30 et 31 assurent l'étanchéité par complémentarité avec un stator 2, visible sur la figure 1, lors du fonctionnement de la turbine basse pression 4.

Lorsque les aubes mobiles 10 sont montées en couronne sur le disque 3, chaque plateforme 28 est en contact avec deux autres plateformes 28 de deux aubes 10 adjacentes, et plus précisément par contact des bords latéraux 283, 284 comme illustré sur la figure 4. La forme des plateformes 28 permet de mettre les aubes 10 mobiles en contrainte de torsion lorsque celles-ci sont en position sur le disque 3, notamment par la mise en appui d'une aube avec les aubes voisines au niveau des bords latéraux 283, 284 des plateformes 28. Cette mise en contrainte permet notamment d'amortir les vibrations auxquelles elles sont soumises en fonctionnement.

Une particularité de l'état de la technique est le fait qu'en fonctionnement moteur, l'effort de contact inter-talon peut évoluer par rapport au cas montage. Cet effet peut être causé soit par la rotation naturelle de la pale (sens horaire ou antihoraire), soit par le mouvement relatif des talons adjacents (rapprochement ou écartement).

Dans le cas d'une variation de l'effort de contact inter-talon à la baisse, il est nécessaire d'amplifier l'effort au montage pour viser l'effort cible à haut régime où l'on cherche à amortir. Cette adaptation se traduit par des sur-contraintes statiques.

Le problème principal est rencontré dans le cas d'aubes en matériau CMC, du fait des admissibles mécaniques faibles sur cette famille de matériau qui rendent les aubes peu tolérantes à la prétorsion. Ainsi, pour une aube en CMC, une forte prétorsion au montage induit des contraintes statiques fortes au regard de l'admissible, et parfois même au-delà.

A noter également que le CMC se dilate trois fois moins que les matériaux métalliques usuels pour les aubes. Cela se traduit par un écartement des talons adjacents à chaud, et donc, pour la configuration de l'état de l'art, à une diminution de l'effort de contact en fonctionnement.

### Exposé de l'invention

L'invention vise à pallier les inconvénients mentionnés ci-dessus et à passer outre les difficultés mentionnées ci-dessus en proposant des aubes de turbine de turbomachine présentant des topologies de contacts inter-talon permettant d'augmenter naturellement l'effort de contact en fonctionnement du moteur, et particulièrement à régime élevé où les sollicitations vibratoires sont les plus importantes.

Un objet de l'invention propose une aube d'une turbomachine, l'aube comprenant une pale s'étendant selon une première direction entre une extrémité intérieure et une extrémité extérieure, un pied d'aube solidaire de l'extrémité intérieure de la pale, et un talon solidaire de l'extrémité extérieure de la pale, le talon comportant une plateforme délimitée, d'une part, selon une deuxième direction perpendiculaire à ladite première direction par un bord amont et un bord aval, et, d'autre part, selon une troisième direction orthogonale à la première direction et à la deuxième direction par un premier bord latéral et un second bord latéral, le premier bord latéral ayant, dans un plan comprenant la deuxième et la troisième directions, une forme complémentaire de la forme du second bord latéral.

Selon une caractéristique générale de l'invention, le premier bord latéral comprend une première portion s'étendant depuis le bord amont ou le bord aval, et une seconde portion en saillie externe selon la troisième direction en formant un angle aigu avec la première portion, et le second bord latéral comprend une forme complémentaire à celle du premier bord latéral pour coopérer par emboîtement avec un premier bord latéral d'une aube identique à ladite aube.

Le second bord latéral ayant une forme complémentaire à celle du premier bord latéral, il comprend donc une première portion de second bord latéral s'étendant depuis le bord amont ou le bord aval, et une seconde portion de second bord latéral en saillie interne selon la troisième direction en formant un angle aigu avec ladite première portion de second bord latéral.

L'invention offre ainsi une technologie d'aube mobile permettant d'auto-générer l'effort de contact nécessaire à haut régime, afin de s'astreindre d'un surdimensionnement de cet effort au montage et à bas régime, surdimensionnement particulièrement sévère pour la tenue statique des aubes en CMC.

En effet, lorsqu'une première et une seconde aubes adjacentes sont emboîtées l'une avec l'autre, la seconde portion du premier bord latéral de la première aube, autrement dit la portion en saillie externe, s'emboite dans la seconde portion du second bord latéral de la seconde aube, c'est-à-dire dans la portion en saillie interne de la seconde aube. L'angle aigu formé entre la première portion et la seconde portion du premier bord latéral de la première aube coopère avec l'angle aigu formé entre la première portion et la seconde portion du second bord latéral de la seconde aube pour coincer les deux aubes ensembles. Les talons des deux aubes sont ainsi maintenus ensembles par contact notamment lorsque des mouvements relatifs tendent à séparer les deux talons selon la troisième direction.

En outre, la première portion du premier bord latéral et le bord amont ou le bord aval forment préférentiellement un autre angle compris entre 65° et 115°. Autrement dit, la première portion du premier bord latéral s'étend depuis le bord amont ou le bord aval en formant un angle compris entre 65° et 115°,par exemple un angle de 90°.

Selon un premier aspect de l'aube, ledit bord aval peut s'étendre parallèlement audit bord amont et posséder une longueur, selon la troisième direction, identique à celle dudit bord amont, ledit bord aval comportant une première extrémité et une seconde extrémité et ledit bord amont comportant une première extrémité et une seconde extrémité, la première extrémité dudit bord aval étant située, selon la troisième direction, entre les première et seconde extrémités dudit bord amont, la seconde extrémité dudit bord amont étant située, selon la troisième direction, entre les première et seconde extrémités dudit bord aval.

Le décalage entre le bord amont et le bord aval permet de suivre la courbure de la pale.

Selon un deuxième aspect de l'aube, le premier bord latéral peut comprendre un profil en Z et le second bord latéral peut comprendre un profil en Z complémentaire du profil en Z du premier bord latéral.

Le profil en Z permet de former un angle aigu du premier bord latéral ouvert en regard du bord aval de l'aube. L'orientation de l'angle aigu du premier bord latéral est ainsi adaptée pour une configuration d'aube avec une torsion naturelle de la pale dans le sens antihoraire que les aubes se rapprochent ou s'éloignent l'une de l'autre lors du fonctionnement de la roue à aubes sur laquelle l'aube est montée.

Selon un troisième aspect de l'aube, la première portion du premier bord latéral peut s'étendre depuis ledit bord aval entre une extrémité aval de la première portion solidaire du bord aval et une extrémité amont de la première portion, et la seconde portion du premier bord latéral peut comprendre un premier tronçon et un second tronçon, ledit premier tronçon s'étendant depuis ledit bord amont entre une extrémité amont du premier tronçon solidaire dudit bord amont et une extrémité aval du premier tronçon, et ledit second tronçon s'étendant entre ladite extrémité aval dudit premier tronçon et ladite extrémité amont de ladite première portion, ledit second tronçon formant un premier angle aigu avec ladite première portion et un second angle aigu avec ledit premier tronçon.

Selon un quatrième aspect de l'aube différent du deuxième et troisième aspects, la première portion du premier bord latéral peut s'étendre depuis ledit bord amont entre une extrémité amont de la première portion solidaire dudit bord amont et une extrémité aval de la première portion, et la seconde portion peut comprendre une première partie s'étendant en saillie externe selon la troisième direction depuis l'extrémité aval de la première portion en formant un angle aigu avec la première portion, et une seconde partie entre ledit bord aval et la première partie, la seconde partie dudit premier bord latéral étant située, selon la troisième direction, entre les première et seconde extrémités dudit bord amont.

Ce profil permet de former un angle aigu du premier bord latéral ouvert en regard du bord amont de l'aube cette fois. L'orientation de l'angle aigu du premier bord latéral est ainsi adaptée pour une configuration d'aube avec une torsion naturelle de la pale dans le sens antihoraire que les aubes se rapprochent ou s'éloignent l'une de l'autre lors du fonctionnement de la roue à aubes sur laquelle l'aube est montée.

Selon un cinquième aspect de l'aube, l'aube peut être en matériau composite à matrice céramique.

Selon un sixième aspect de l'aube, l'aube peut être une aube mobile pour une roue à aubes mobile de turbine de turbomachine.

L'invention a également pour objet, une turbine de turbomachine comprenant une roue mobile à aubes montée en rotation autour d'un axe central, la roue à aubes comprenant une couronne annulaire d'aubes telles que définies ci-dessus.

L'invention a également pour objet, une turbomachine comprenant une turbine de turbomachine telle que définie ci-dessus.

L'invention a aussi pour objet, un aéronef comprenant au moins une turbomachine telle que définie ci-dessus.

### Brève description des dessins

[Fig. 1] La figure 1, déjà décrite, est une vue schématique d'une portion de turbine basse pression d'une turbomachine selon l'état de la technique.
[Fig. 2] La figure 2, déjà décrite, est une vue en perspective d'une aube mobile de la turbine basse pression de la figure 1.
[Fig. 3] La figure 3, déjà décrite, est une vue schématique de dessus de l'aube mobile illustrée sur la figure 2.
[Fig. 4] La figure 4, déjà décrite, est une vue schématique en perspective de la partie supérieure d'une portion de couronne assemblée de la turbine basse pression de la figure 1.
[Fig. 5] La figure 5 présente une vue schématique en coupe d'une aube selon un premier mode de réalisation de l'invention.
[Fig. 6] La figure 6 présente une vue schématique en coupe d'un assemblage d'aubes de la figure 5.
[Fig. 7] La figure 7 présente une vue schématique en coupe d'une aube selon un second mode de réalisation de l'invention.
[Fig. 8] La figure 8 présente une vue schématique en coupe d'un assemblage d'aubes de la figure 7.

### Description des modes de réalisation

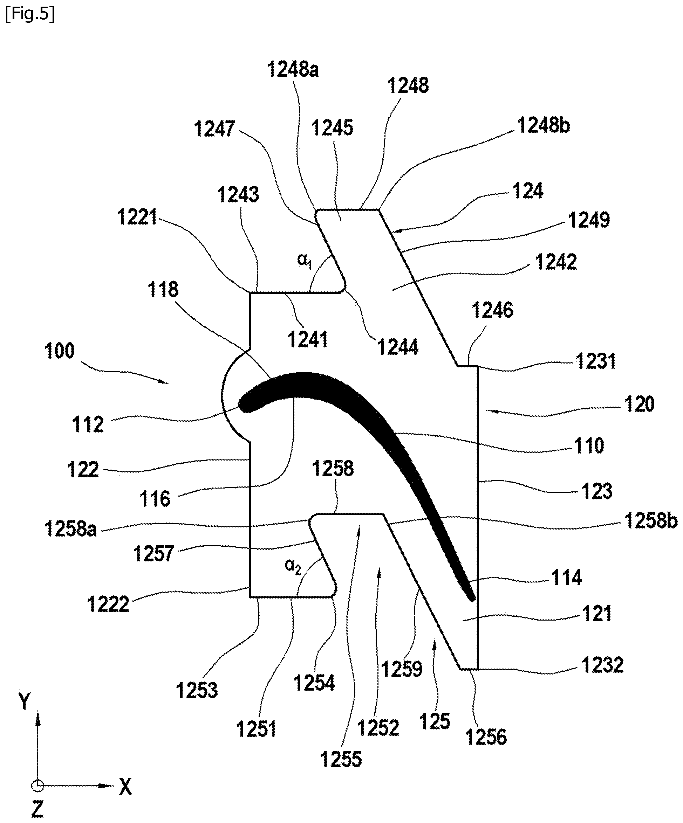

Sur la figure 5 est représenté une vue schématique en coupe d'une aube 100 selon un premier mode de réalisation de l'invention.

L'aube 100 selon l'invention est destinée à être montée sur une roue à aubes d'une turbine d'une turbomachine telle que la turbine basse pression 4 de la turbomachine de la figure 1.

Dans le premier mode de réalisation, l'aube 100 comprend une pale 110, un pied d'aube (non représenté), et un talon 120, la pale 110 s'étendant selon une première direction Z entre le pied d'aube et le talon 120. Lorsque l'aube 100 est montée sur une roue à aube, la première direction Z correspond à la direction radiale de la roue à aube, et le talon 120 se situe, selon la direction radiale de la roue à aubes, à l'extrémité radialement externe de la pale 110 et le pied d'aube à l'extrémité radialement interne de la pale 110.

La pale 110 comprend un bord d'attaque 112, un bord de fuite 114, un côté intrados 116 et un côté extrados 118.

Le talon d'aube 120 comprend une plateforme 121 s'étendant dans un plan orthogonal à la première direction Z. La plateforme 121 s'étend dans un plan comprenant une deuxième direction X et une troisième direction Y orthogonale l'une à l'autre. Lorsque l'aube 100 est montée sur une roue à aube, la deuxième direction X correspond à la direction axiale autour de laquelle la roue à aubes est en rotation, et la troisième direction Y correspond à la direction circonférentielle de la roue à aubes.

La plateforme 121 du talon d'aube 120 comprend un bord amont 122, un bord aval 123, un premier bord latéral 124 et un second bord latéral 125. La plateforme 121 est ainsi délimitée, d'une part, selon la deuxième direction X par le bord amont 122 et le bord aval 123, et, d'autre part, selon la troisième direction Y par le premier bord latéral 124 et le second bord latéral 125. Le bord d'attaque 112 de la pale 110 est à proximité, et en regard, du bord amont 122 de la plateforme121, tandis que le bord de fuite 114 de la pale 110 est à proximité, et en regard du bord aval 123 de la plateforme 121. Le côté extrados 118 de la pale 110 est en regard du premier bord latéral 124 de la plateforme 121, tandis que le côté intrados 116 de la pale 110 est en regard du second bord latéral 125 de la plateforme.

Dans le premier mode de réalisation illustré sur la figure 5, le premier bord latéral 124 comprend une première portion 1241 s'étendant perpendiculairement selon la deuxième direction X depuis le bord amont 122, et une seconde portion 1242 s'étendant entre la première portion 1241 du premier bord latéral 124 et le bord aval 123. La première portion 1241 du premier bord latéral 124 comprend, dans la deuxième direction X, une extrémité amont 1243 solidaire du bord amont 122 et une extrémité aval 1244 solidaire de la seconde portion 1242 du premier bord latéral 124.

La seconde portion 1242 du premier bord latéral 124 comprend une première partie 1245 s'étendant en saillie externe selon la troisième direction Y depuis l'extrémité aval 1244 de la première portion 1241 en formant un premier angle α₁ aigu avec la première portion 1241 du premier bord latéral 124. La seconde portion 1242 du premier bord latéral 124 comprend également une seconde partie 1246 s'étendant parallèlement à ladite première portion 1241 du premier bord latéral 124 et s'étendant entre le bord aval 123 et la première partie 1245 du premier bord latéral 124.

Par saillie externe, on entend une partie en saillie du premier bord latéral 124 s'étendant en direction opposée au second bord latéral 125.

La première partie 1245 de la seconde portion 1242 du premier bord latéral 124 comprend trois segments 1247, 1248, 1249. Le deuxième segment 1248 de la première partie 1245 de la seconde portion 1242 du premier bord latéral 124 s'étend parallèlement à la première portion 1241 entre une extrémité amont 1248a du deuxième segment 1248 solidaire du premier segment 1247 et une extrémité aval 1248b du deuxième segment 1248 solidaire du troisième segment 1249 de la première partie 1245. Le premier segment 1247 et le troisième segment 1249 de la première partie 1245 de la seconde portion 1242 du premier bord latéral 124 s'étendent parallèlement l'un à l'autre. Le premier segment 1247 s'étend entre l'extrémité aval 1244 de la première portion 1241 du premier bord latéral 124 et l'extrémité amont 1248a du deuxième segment 1248 et forme le premier angle α₁ avec la première portion 1241 du premier bord latéral 124. Le troisième segment 1249 s'étend entre l'extrémité aval 1248b du deuxième segment 1248 et la seconde partie 1246. Le troisième segment 1249 forme un angle complémentaire au premier angle α₁ avec la seconde partie 1246 de la seconde portion 1242 du premier bord latéral 124.

En outre, le bord amont 122 comprend, selon la troisième direction Y, une première extrémité 1221 solidaire de la première extrémité 1243 de la première portion 1241 du premier bord latéral 124 et une seconde extrémité 1222 solidaire du second bord latéral 125. La seconde partie 1246 du premier bord latéral 124 est située, selon la troisième direction Y, entre la première extrémité 1221 du bord amont 122 et la seconde extrémité 1222 du bord amont 122.

Le second bord latéral 125 comprend une première portion 1251 s'étendant perpendiculairement selon la deuxième direction X depuis le bord amont 122, et une seconde portion 1252 s'étendant entre la première portion 1251 du second bord latéral 125 et le bord aval 123. La première portion 1251 du second bord latéral 125 comprend, dans la deuxième direction X, une extrémité amont 1253 solidaire du bord amont 122 et une extrémité aval 1254 solidaire de la seconde portion 1252 du second bord latéral 125.

La seconde portion 1252 du second bord latéral 125 comprend une première partie 1255 s'étendant en saillie interne selon la troisième direction Y depuis l'extrémité aval 1254 de la première portion 1251 en formant un second angle α₂ aigu avec la première portion 1251 du second bord latéral 125. Le premier angle α₁ et le second angle α₂ ont la même valeur α. La seconde portion 1252 du second bord latéral 125 comprend également une seconde partie 1256 s'étendant parallèlement à ladite première portion 1251 du second bord latéral 125 entre le bord aval 123 et la première partie 1255 du second bord latéral 125.

Par saillie interne, on entend une partie en saillie du second bord latéral 125 s'étendant en direction du premier bord latéral 124.

La première partie 1255 de la seconde portion 1252 du second bord latéral 125 comprend trois segments 1257, 1258, 1259. Le deuxième segment 1258 de la première partie 1255 de la seconde portion 1252 du second bord latéral 125 s'étend parallèlement à la première portion 1251 du second bord latéral 125 entre une extrémité amont 1258a du deuxième segment 1258 solidaire du premier segment 1257 et une extrémité aval 1258b du deuxième segment 1258 solidaire du troisième segment 1259 de la première partie 1255 de la seconde portion 1252 du second bord latéral. Le premier segment 1257 et le troisième segment 1259 de la première partie 1255 de la seconde portion 1252 du second bord latéral 125 s'étendent parallèlement l'un à l'autre. Le premier segment 1257 s'étend entre l'extrémité aval 1254 de la première portion 1251 du second bord latéral 125 et l'extrémité amont 1258a du deuxième segment 1258 de la première partie 1255 de la seconde portion 1252 du second bord latéral 125, et forme le second angle α₂ avec la première portion 1251 du second bord latéral 125. Le troisième segment 1259 de la première partie 1255 de la seconde portion 1252 du second bord latéral 125 s'étend entre l'extrémité aval 1258b du deuxième segment 1258 et la seconde partie 1256 de la seconde portion 1252 du second bord latéral 125. Le troisième segment 1259 de la première partie 1255 de la seconde portion 1252 du second bord latéral 125 forme un angle complémentaire au second angle α₂ avec la seconde partie 1256 de la seconde portion 1252 du second bord latéral 125.

En outre, le bord aval 123 comprend, selon la troisième direction Y, une première extrémité 1231 solidaire de la seconde partie 1246 de la seconde portion 1242 du premier bord latéral 124 et une seconde extrémité 1232 solidaire de la seconde partie 1256 de la seconde portion 1252 du second bord latéral 125. La seconde extrémité 1222 du bord amont 122 est située, selon la troisième direction Y, entre la première extrémité 1231 du bord aval 123 et la seconde extrémité 1232 du bord aval 123.

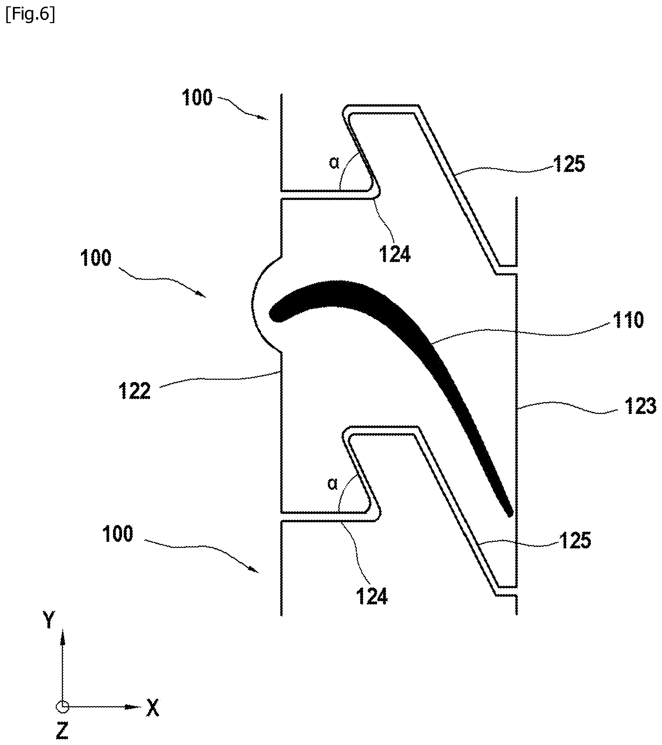

Comme cela est illustré sur la figure 6, lorsqu'une pluralité d'aubes 100 sont assemblées ensemble pour former une couronne annulaire, le premier bord latéral 124 d'une première aube 100 coopère avec le second bord latéral 125 d'une seconde aube 100 adjacente à la première aube 100 selon la troisième direction Y, la seconde portion 1242 en saillie externe du premier bord latéral 124 de la première aube 100 s'emboîtant dans la second portion 1252 en saillie interne du second bord latéral 125 de la seconde aube 100, et le premier segment 1247 de la première partie 1245 de la seconde portion 1242 du premier bord latéral 124 étant en contact avec le premier segment 1257 de le première partie 1255 de la seconde portion 1252 du second bord latéral 125 de la seconde aube 100.

Ce mode de réalisation est ainsi adapté pour une configuration d'aube où les talons adjacents s'éloignent les uns des autres lors du fonctionnement de la roue à aubes sur laquelle l'aube est montée, et où la torsion naturelle de la pale est dans le sens antihoraire dans le plan comprenant les deuxième et troisième directions X et Y.

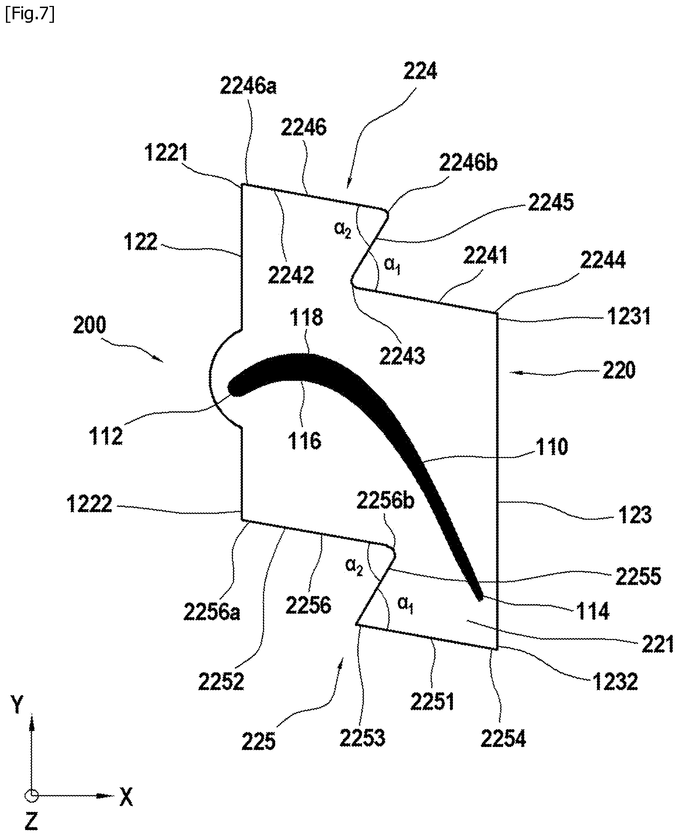

Sur la figure 7 est représenté une vue schématique en coupe d'une aube 200 selon un second mode de réalisation de l'invention.

L'aube 200 selon l'invention est destinée à être montée sur une roue à aubes d'une turbine d'une turbomachine telle que la turbine basse pression 4 de la turbomachine de la figure 1.

Dans le second mode de réalisation, les éléments strictement identiques à l'aube 100 selon le premier mode de réalisation illustrée sur la figure 5 portent les mêmes références.

L'aube 200 selon le second mode de réalisation comprend une pale 110, un pied d'aube (non représenté), et un talon 220, la pale 110 s'étendant selon une première direction Z entre le pied d'aube et le talon 220. Lorsque l'aube 200 est montée sur une roue à aube, la première direction Z correspond à la direction radiale de la roue à aube, et le talon 220 se situe, selon la direction radiale de la roue à aubes, à l'extrémité radialement externe de la pale 110 et le pied d'aube à l'extrémité radialement interne de la pale 110.

La pale 110 comprend un bord d'attaque 112, un bord de fuite 114, un côté intrados 116 et un côté extrados 118.

Le talon d'aube 220 comprend une plateforme 221 s'étendant dans un plan orthogonal à la première direction Z. La plateforme 221 s'étend dans un plan comprenant une deuxième direction X et une troisième direction Y orthogonale l'une à l'autre. Lorsque l'aube 200 est montée sur une roue à aube, la deuxième direction X correspond à la direction axiale autour de laquelle la roue à aubes est en rotation, et la troisième direction Y correspond à la direction circonférentielle de la roue à aubes.

La plateforme 221 du talon d'aube 220 comprend un bord amont 122, un bord aval 123, un premier bord latéral 224 et un second bord latéral 225. La plateforme 221 est ainsi délimitée, d'une part, selon la deuxième direction X par le bord amont 122 et le bord aval 123, et, d'autre part, selon la troisième direction Y par le premier bord latéral 224 et le second bord latéral 225. Le bord d'attaque 112 de la pale 110 est à proximité, et en regard, du bord amont 122 de la plateforme 221, tandis que le bord de fuite 114 de la pale 110 est à proximité, et en regard du bord aval 123 de la plateforme 221. Le côté extrados 118 de la pale 110 est en regard du premier bord latéral 224 de la plateforme 221, tandis que le côté intrados 116 de la pale 110 est en regard du second bord latéral 225 de la plateforme 221.

Dans le second mode de réalisation illustré sur la figure 7, le premier bord latéral 224 comprend une première portion 2241 s'étendant depuis le bord aval 123, et une seconde portion 2242 s'étendant entre le bord amont 122 et la première portion 2241 du premier bord latéral 224. La première portion 2241 s'étend en formant un angle avec la deuxième direction X compris entre 0° et 40°, et de préférence entre 10° et 30°. La première portion 2241 du premier bod latéral 224 comprend, dans la deuxième direction X, une extrémité amont 2243 solidaire de la seconde portion 2242 du premier bord latéral 224 et une extrémité aval 2244 solidaire du bord aval 123.

La seconde portion 2242 du premier bord latéral 224 comprend une première partie 2245 formant un segment et s'étendant en saillie externe selon la troisième direction Y depuis l'extrémité amont 2243 de la première portion 2241 en formant un premier angle α₁ aigu avec la première portion 2241 du premier bord latéral 224. La seconde portion 2242 du premier bord latéral 224 comprend également une seconde partie 2246 formant un segment s'étendant parallèlement à ladite première portion 2241 du premier bord latéral 224 et s'étendant entre le bord amont 122 et la première partie 2245 du premier bord latéral 224.

Par saillie externe, on entend une partie en saillie d'une partie du premier bord latéral 224 s'étendant en direction opposée au second bord latéral 225.

La seconde partie 2246 de la seconde portion 2242 du premier bord latéral 224 s'étend parallèlement au segment formé par la première portion 2241 entre une extrémité amont 2246a et une extrémité aval 2246b. Le bord amont 122 comprend, selon la troisième direction Y, une première extrémité 1221 solidaire de l'extrémité amont 2246a de la seconde partie 2246 de la seconde portion 2242 du premier bord latéral 224 et une seconde extrémité 1222 solidaire du second bord latéral 225.

La première partie 2245 de la seconde portion 2242 du premier bord latéral 224 forme un segment s'étendant entre l'extrémité aval 2246b de la seconde partie 2246 de la seconde portion 2242 du premier bord latéral 224 et l'extrémité amont 2243 de la première portion 2241 du premier bord latéral 224.

En plus de former un premier angle α₁ avec le segment formé par la première portion 2241 du premier bord latéral 224, le segment formé par la première partie 2245 de la seconde portion 2242 du premier bord latéral 224 forme un second angle α₂ avec le segment formé par la seconde partie 2246 de la seconde portion 2242 du premier bord latéral 224. Etant donné que le segment formé par la seconde partie 2246 de la seconde portion 2242 du premier bord latéral 224 et le segment formé par la première partie 2241 sont parallèles entre eux, le premier angle α₁ et le second angle α₂ ont une même valeur α.

La première portion 2241 du premier bord latéral 224 est située, selon la troisième direction Y, entre la première extrémité 1221 du bord amont 122 et la seconde extrémité 1222 du bord amont 122. En outre, le bord aval 123 comprend, selon la troisième direction Y, une première extrémité 1231 solidaire de l'extrémité aval 2244 de la première portion 2241 du premier bord latéral 224 et une seconde extrémité 1232 solidaire du second bord latéral 225. Le bord amont 122 et le bord aval 123 ont la même longueur selon la troisième direction Y. La première extrémité 1231 du bord aval 123 est située, selon la troisième direction Y, entre la première extrémité 1221 du bord amont 122 et la seconde extrémité 1222 du bord amont 122.

Le second bord latéral 225 comprend une première portion 2251 s'étendant depuis le bord aval 123, et une seconde portion 2252 s'étendant entre le bord amont 122 et la première portion 2251 du second bord latéral 225. La première portion 2251 du second bord latéral 225 s'étend en formant un angle avec la deuxième direction X compris entre 0° et 40°, et de préférence entre 10°et 30°. La première portion 2251 du second bord latéral 225 comprend, dans la deuxième direction X, une extrémité amont 2253 solidaire de la seconde portion 2252 du second bord latéral 225 et une extrémité aval 2254 solidaire du bord aval 123.

La seconde portion 2252 du second bord latéral 225 comprend une première partie 2255 formant un segment et s'étendant en saillie interne selon la troisième direction Y depuis l'extrémité amont 2253 de la première portion 2251 en formant avec la première portion 2251 du second bord latéral 22 un angle aigu identique audit premier angle α₁. La seconde portion 2252 du second bord latéral 225 comprend également une seconde partie 2256 formant un segment s'étendant parallèlement à ladite première portion 2251 du second bord latéral 225 et s'étendant entre le bord amont 122 et la première partie 2255 du premier bord latéral 225.

Par saillie interne, on entend une partie en saillie du second bord latéral 225 s'étendant en direction du premier bord latéral 224.

La seconde partie 2256 de la seconde portion 2252 du second bord latéral 225 s'étend parallèlement au segment formé par la première portion 2251 du second bord latéral entre une extrémité amont 2256a et une extrémité aval 2256b. La seconde extrémité 1222 du bord amont 122 est solidaire de l'extrémité amont 2256a de la seconde partie 2256 de la seconde portion 2252 du second bord latéral 225.

La première partie 2255 de la seconde portion 2252 du second bord latéral 225 forme un segment s'étendant entre l'extrémité aval 2256b de la seconde partie 2256 de la seconde portion 2252 du second bord latéral 225 et l'extrémité amont 2253 de la première portion 2251 du second bord latéral 225.

En plus de former un premier angle α₁ avec le segment formé par la première portion 2251 du second bord latéral 225, le segment formé par la première partie 2255 de la seconde portion 2252 du second bord latéral 225 forme un second angle α₂ avec le segment formé par la seconde partie 2256 de la seconde portion 2252 du second bord latéral 225. Etant donné que le segment formé par la seconde partie 2256 de la seconde portion 2252 du second bord latéral 225 et le segment formé par la première partie 2251 sont parallèles entre eux, le premier angle α₁ et le second angle α₂ ont une même valeur α.

La seconde partie 2256 de la seconde portion 2252 du second bord latéral 225 est située, selon la troisième direction Y, entre la première extrémité 1231 du bord aval 123 et la seconde extrémité 1232 du bord aval 123. En outre, la seconde extrémité 1232 du bord aval 123 est solidaire de l'extrémité aval 2254 de la première portion 2251 du second bord latéral 225.

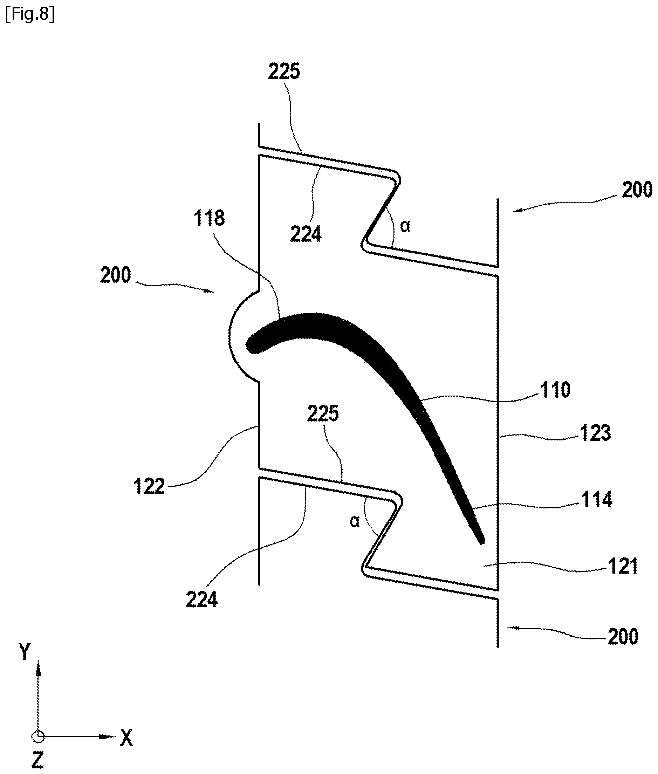

Comme cela est illustré sur la figure 8, lorsqu'une pluralité d'aubes 200 selon le second mode de réalisation sont assemblées ensemble pour former une couronne annulaire, le premier bord latéral 224 d'une première aube 200 coopère avec le second bord latéral 225 d'une seconde aube 200 adjacente à la première aube 200 selon la troisième direction Y, la seconde portion 2242 en saillie externe du premier bord latéral 224 de la première aube 200 s'emboîtant dans la second portion 2252 en saillie interne du second bord latéral 225 de la seconde aube 200, et le segment formé par la première partie 2245 de la seconde portion 2242 du premier bord latéral 224 étant en contact avec le segment formé par la première partie 2255 de la seconde portion 2252 du second bord latéral 225 de la seconde aube 100.

Ce mode de réalisation est adapté pour une configuration d'aube où les talons adjacents s'éloignent les uns des autres lors du fonctionnement de la roue à aubes sur laquelle l'aube est montée, et où la torsion naturelle de la pale est dans le sens horaire dans le plan comprenant les deuxième et troisième directions X et Y.

L'invention offre ainsi une technologie d'aube mobile permettant d'auto-générer l'effort de contact nécessaire à haut régime, afin de s'astreindre d'un surdimensionnement de cet effort au montage et à bas régime, surdimensionnement particulièrement sévère pour la tenue statique des aubes en CMC.

## Revendications

1. Aube (100, 200) de turbomachine, l'aube (100, 200)
comprenant une pale (110) s'étendant selon une première direction (Z) entre une extrémité intérieure et une extrémité extérieure, un pied d'aube solidaire de l'extrémité intérieure de la pale (110), et un talon (120, 220) solidaire de l'extrémité extérieure de la pale (110), le talon (120, 220) comportant une plateforme (121, 221) délimitée, selon une deuxième direction (X) perpendiculaire à ladite première direction (Z), par un bord amont (122) et un bord aval (123), et délimitée, selon une troisième direction (Y) orthogonale à la première direction (Z) et à la deuxième direction (X), par un premier bord latéral (124, 224) et un second bord latéral (125, 225), le premier bord latéral (124, 224) ayant, dans un plan comprenant la deuxième et la troisième directions (X, Y), une forme complémentaire de la forme du second bord latéral (125, 225),
**caractérisée en ce que** le premier bord latéral (124, 224) comprend une première portion (1241, 2241) s'étendant depuis le bord amont (122) ou le bord aval (123), et une seconde portion (1242, 2242) en saillie externe selon la troisième direction (Y) en formant un angle aigu (α, α₁, α₂) avec la première portion (1241, 2241), et le second bord latéral (125, 225) comprend une forme complémentaire à celle du premier bord latéral (124, 224) pour coopérer par emboîtement avec un premier bord latéral (124, 224) d'une aube identique à la dite aube (100, 200).

2. Aube (100, 200) selon la revendication 1, dans laquelle ledit bord aval (123) s'étend parallèlement audit bord amont (122) et possède une longueur, selon la troisième direction (Y), identique à celle dudit bord amont (122), ledit bord aval (123) comportant une première extrémité (1231) et une seconde extrémité (1232) et ledit bord amont (122) comportant une première extrémité (1221) et une seconde extrémité (1222), la première extrémité (1231) dudit bord aval (123) étant située, selon la troisième direction (Y), entre les première et seconde extrémités (1221, 1222) dudit bord amont (122), la seconde extrémité (1222) dudit bord amont (122) étant située, selon la troisième direction (Y), entre les première et seconde extrémités (1231, 1232) dudit bord aval (123).

3. Aube (200) selon la revendication 2, dans laquelle le premier bord latéral (224) comprend un profil en Z et le second bord latéral (225) comprend un profil en Z complémentaire du profil en Z du premier bord latéral (224).

4. Aube (200) selon la revendication 3, dans laquelle la première portion (2241) du premier bord latéral (224) s'étend depuis ledit bord aval (123) entre une extrémité aval (2244) de la première portion (2241) solidaire du bord aval (123) et une extrémité amont (2243) de la première portion (2241), et la seconde portion (2242) du premier bord latéral (224) comprend un premier tronçon (2246) et un second tronçon (2245), ledit premier tronçon (2246) s'étendant depuis ledit bord amont (122) entre une extrémité amont (2246a) du premier tronçon (2246) solidaire dudit bord amont (122) et une extrémité aval (2246b) du premier tronçon (2246), et ledit second tronçon (2245) s'étendant entre ladite extrémité aval (2246b) dudit premier tronçon (2246) et ladite extrémité amont (2243) de ladite première portion (2241), ledit second tronçon (2245) formant un premier angle aigu (α₁) avec ladite première portion (2241) et un second angle aigu (α₂) avec ledit premier tronçon (2246).

5. Aube (100) selon la revendication 2, dans laquelle la première portion (1241) du premier bord latéral (124) s'étend depuis ledit bord amont (122) entre une extrémité amont (1243) de la première portion (1241) solidaire dudit bord amont (122) et une extrémité aval (1244) de la première portion (124), et la seconde portion (1242) comprend une première partie (1245) s'étendant en saillie externe selon la troisième direction (Y) depuis l'extrémité aval (1244) de la première portion (1241) en formant un angle aigu (α₁) avec la première portion (1241), et une seconde partie (1246) s'étendant entre ledit bord aval (123) et la première partie (1245), la seconde partie (1246) dudit premier bord latéral (124) étant située, selon la troisième direction (Y), entre les première et seconde extrémités (1221, 1222) dudit bord amont (122).

6. Aube (100, 200) selon l'une des revendications 1 à 5, dans laquelle l'aube (100, 200) est en matériau composite à matrice céramique.

7. Aube (100, 200) selon l'une des revendications 1 à 6, dans laquelle l'aube (100, 200) est une aube mobile pour une roue à aubes mobile de turbine de turbomachine.

8. Turbine (1) de turbomachine comprenant une roue mobile à aubes montée en rotation autour d'un axe central, la roue à aubes comprenant une couronne annulaire d'aubes (100, 200) selon l'une des revendications 1 à 7.

9. Turbomachine comprenant une turbine (1) selon la revendication 8.

10. Aéronef comprenant au moins une turbomachine selon la revendication 9.

## Patentansprüche

1. Schaufel (100, 200) für eine Turbomaschine, wobei die Schaufel (100, 200) ein Blatt (110), das sich gemäß einer ersten Richtung (Z) zwischen einem inneren Ende und einem äußeren Ende erstreckt, einen Schaufelfuß, der mit dem inneren Ende des Blatts (110) fest verbunden ist, und ein Deckband (120, 220) umfasst, das mit dem äußeren Ende des Blatts (110) fest verbunden ist, wobei das Deckband (120, 220) eine Plattform (121, 221) beinhaltet, die gemäß einer zweiten Richtung (X) senkrecht auf die erste Richtung (Z) durch einen stromaufwärtigen Rand (122) und einen stromabwärtigen Rand (123) begrenzt wird, und gemäß einer dritten Richtung (Y) senkrecht auf die erste Richtung (Z) und auf die zweite Richtung (X) durch einen ersten seitlichen Rand (124, 224) und einen zweiten seitlichen Rand (125, 225) begrenzt wird, wobei der erste seitliche Rand (124, 224) in einer Ebene, welche die zweite und die dritte Richtung (X, Y) umfasst, eine Form aufweist, die komplementär zu der Form des zweiten seitlichen Randes (125, 225) ist,
**dadurch gekennzeichnet, dass** der erste seitliche Rand (124, 224) einen ersten Abschnitt (1241, 2241), der sich von dem stromaufwärtigen Rand (122) oder dem stromabwärtigen Rand (123) erstreckt, und einen zweiten Abschnitt (1242, 2242) umfasst, der gemäß der dritten Richtung (Y) unter Bildung eines spitzen Winkels (α₁, α₂, α₃) mit dem ersten Abschnitt (1241, 2241) nach außen hervorsteht, und der zweite seitliche Rand (125, 225) eine Form aufweist, die zu jener des ersten seitlichen Randes (124, 224) komplementär ist, um mit einem ersten seitlichen Rand (124, 224) einer Schaufel, die identisch mit der Schaufel (100, 200) ist, ineinandergreifend zusammenzuwirken.

2. Schaufel (100, 200) nach Anspruch 1, wobei der stromabwärtige Rand (123) sich parallel zu dem stromaufwärtigen Rand (122) erstreckt und eine Länge gemäß der dritten Richtung (Y) aufweist, die identisch mit jener des stromaufwärtigen Randes (122) ist, wobei der stromabwärtige Rand (123) ein erstes Ende (1231) und ein zweites Ende (1232) beinhaltet und der stromaufwärtige Rand (122) ein erstes Ende (1221) und ein zweites Ende (1222) beinhaltet, wobei das erste Ende (1231) des stromabwärtigen Randes (123) sich gemäß der dritten Richtung (Y) zwischen dem ersten und dem zweiten Ende (1221, 1222) des stromaufwärtigen Randes (122) befindet, wobei sich das zweite Ende (1222) des stromaufwärtigen Randes (122) gemäß der dritten Richtung (Y) zwischen dem ersten und dem zweiten Ende (1231, 1232) des stromabwärtigen Randes (123) befindet.

3. Schaufel (200) nach Anspruch 2, wobei der erste seitliche Rand (224) ein Z-förmiges Profil aufweist und der zweite seitliche Rand (225) ein Z-förmiges Profil aufweist, das komplementär zu dem Z-förmigen Profil des ersten seitlichen Randes (224) ist.

4. Schaufel (200) nach Anspruch 3, wobei der erste Abschnitt (2241) des ersten seitlichen Randes (224) sich von dem stromabwärtigen Rand (123) zwischen einem stromabwärtigen Ende (2244) des ersten Abschnitts (2241), das mit dem stromabwärtigen Rand (123) fest verbunden ist, und einem stromaufwärtigen Ende (2243) des ersten Abschnitts (2241) erstreckt, und der zweite Abschnitt (2242) des ersten seitlichen Randes (224) ein erstes Teilstück (2246) und ein zweites Teilstück 2245) umfasst, wobei das erste Teilstück (2246) sich von dem stromaufwärtigen Rand (122) zwischen einem stromaufwärtigen Ende (2246a) des ersten Teilstücks (2246), das mit dem stromaufwärtigen Rand (122) fest verbunden ist, und einem stromabwärtigen Ende (2246b) des ersten Teilstücks (2246) erstreckt, und das zweite Teilstück (2245) sich zwischen dem stromabwärtigen Ende (2246b) des ersten Teilstücks (2246) und dem stromaufwärtigen Ende (2243) des ersten Abschnitts (2241) erstreckt, wobei das zweite Teilstück (2245) einen ersten spitzen Winkel (α₁) mit dem ersten Abschnitt (2241) und einen zweiten spitzen Winkel (α₂) mit dem ersten Teilstück (2246) bildet.

5. Schaufel (100) nach Anspruch 2, wobei der erste Abschnitt (1241) des ersten seitlichen Randes (124) sich von dem stromaufwärtigen Rand (122) zwischen einem stromaufwärtigen Ende (1243) des ersten Abschnitts (1241), der mit dem stromaufwärtigen Rand (122) fest verbunden ist, und einem stromabwärtigen Ende (1244) des ersten Abschnitts (124) erstreckt, und der zweite Abschnitt (1242) einen ersten Teil (1245), der gemäß der dritten Richtung (Y) von einem stromabwärtigen Ende (1244) des ersten Abschnitts (1241) unter Bildung eines spitzen Winkels (α₁) mit dem ersten Abschnitt (1241) nach außen hervorsteht, und einen zweiten Teil (1246) umfasst, der sich zwischen dem stromabwärtigen Rand (123) und dem ersten Teil (1245) erstreckt, wobei der zweite Teil (1246) des ersten seitlichen Randes (124) sich gemäß der dritten Richtung (Y) zwischen dem ersten und dem zweiten Ende (1221, 1222) des stromaufwärtigen Randes (122) erstreckt.

6. Schaufel (100, 200) nach einem der Ansprüche 1 bis 5, wobei die Schaufel (100, 200) aus Verbundmaterial mit keramischer Matrix besteht.

7. Schaufel (100, 200) nach einem der Ansprüche 1 bis 6, wobei die Schaufel (100, 200) eine bewegliche Schaufel für ein bewegliches Schaufelrad einer Turbine einer Turbomaschine ist.

8. Turbine (1) für eine Turbomaschine mit einem beweglichen Schaufelrad, das um eine Mittelachse drehbar gelagert ist, wobei das Schaufelrad einen ringförmigen Kranz von Schaufeln (100, 200) nach einem der Ansprüche 1 bis 7 umfasst.

9. Turbomaschine umfassend eine Turbine (1) nach Anspruch 8.

10. Luftfahrzeug umfassend zumindest eine Turbomaschine nach Anspruch 9.

## Claims

1. A turbomachine blade (100, 200), the blade (100, 200) comprising an airfoil (110) extending along a first direction (Z) between an internal end and an external end, a blade base secured to the internal end of the airfoil (110), and a root (120, 220) secured to the external end of the airfoil (110), the root (120, 220) including a platform (121, 221) delimited along a second direction (X) perpendicular to said first direction (Z) by an upstream edge (122) and a downstream edge (123) and delimited along a third direction (Y) orthogonal to the first direction (Z) and to the second direction (X) by a first lateral edge (124, 224) and a second lateral edge (125, 225), the first lateral edge (124, 224) having, in a plane comprising the second and third directions (X, Y), a shape complementary to the shape of the second lateral edge (125, 225),
**characterized in that** the first lateral edge (124, 224) comprises a first portion (1241, 2241) extending from the upstream edge (122) or the downstream edge (123), and a second portion (1242, 2242) externally protruding along the third direction (Y) at an acute angle (*α, α*₁*, α*₂) with the first portion (1241, 2241), and the second lateral edge (125, 225) comprises a shape complementary to that of the first lateral edge (124, 224) to cooperate by nesting with a first lateral edge (124, 224) of a blade identical to said blade (100, 200).

2. The blade (100, 200) according to claim 1, wherein said downstream edge (123) extends parallel to said upstream edge (122) and has a length, along the third direction (Y), identical to that of said upstream edge (122), said downstream edge (123) including a first end (1231) and a second end (1232) and said upstream edge (122) including a first end (1221) and a second end (1222), the first end (1231) of said downstream edge (123) being located, along the third direction (Y), between the first and second ends (1221, 1222) of said upstream edge (122), the second end (1222) of said upstream edge (122)) being located, along the third direction (Y), between the first and second ends (1231, 1232) of said downstream edge (123).

3. The blade (200) according to claim 2, wherein the first lateral edge (224) comprises a Z-shaped profile and the second lateral edge (225) comprises a Z-shaped profile complementary to the Z-shaped profile of the first lateral edge (224).

4. The blade (200) according to claim 3, wherein the first portion (2241) of the first lateral edge (224) extends from said downstream edge (123) between a downstream end (2244) of the first portion (2241) secured to the downstream edge (123) and an upstream end (2243) of the first portion (2241), and the second portion (2242) of the first lateral edge (224) comprises a first section (2246) and a second section (2245), said first section (2246) extending from said upstream edge (122) between an upstream end (2246a) of the first section (2246) secured to said upstream edge (122) and a downstream end (2246b) of the first section (2246), and said second section (2245) extending between said downstream end (2246b) of said first section (2246) and said upstream end (2243) of said first portion (2241), said second section (2245) forming a first angle acute (*α*₁) with said first portion (2241) and a second acute angle (*α*₂) with said first section (2246).

5. The blade (100) according to claim 2, wherein the first portion (1241) of the first lateral edge (124) extends from said upstream edge (122) between an upstream end (1243) of the first portion (1241) secured to said upstream edge (122) and a downstream end (1244) of the first portion (124), and the second portion (1242) comprises a first part (1245) externally protruding along the third direction (Y) from the downstream end (1244) of the first portion (1241) at an acute angle (*α*₁) with the first portion (1241), and a second part (1246) extending between said downstream edge (123) and the first part (1245), the second part (1246) of said first lateral edge (124) being located, along the third direction (Y), between the first and second ends (1221, 1222) of said upstream edge (122).

6. The blade (100, 200) according to any of claims 1 to 5, wherein the blade (100, 200) is made of ceramic matrix composite material.

7. The blade (100, 200) according to any of claims 1 to 6, wherein the blade (100, 200) is a blade for a moving bladed wheel of a turbomachine turbine.

8. A turbomachine turbine (1) comprising a moving bladed wheel mounted in rotation about a central axis, the bladed wheel comprising an annular ring of blades (100, 200) according to any of claims 1 to 7.

9. A turbomachine comprising a turbine (1) according to claim 8.

10. An aircraft comprising at least one turbomachine according to claim 9.
